(19) Europäisches Patentamt
European Patent Office
Office européen des brevets

(11) **EP 3 938 636 B1**

(12) **EUROPÄISCHE PATENTSCHRIFT**

(45) Veröffentlichungstag und Bekanntmachung des Hinweises auf die Patenterteilung:
**28.09.2022 Patentblatt 2022/39**

(21) Anmeldenummer: **20729935.5**

(22) Anmeldetag: **06.03.2020**

(51) Internationale Patentklassifikation (IPC):
*F02C 6/20* ^(2006.01)   *F02C 3/20* ^(2006.01)
*F01D 15/02* ^(2006.01)

(52) Gemeinsame Patentklassifikation (CPC):
**F02C 3/20; B60H 1/3202; F01D 15/02; F02C 6/20;**
B60H 3/022; B60H 2001/3289; F05D 2220/76;
Y02T 50/60

(86) Internationale Anmeldenummer:
**PCT/DE2020/000048**

(87) Internationale Veröffentlichungsnummer:
**WO 2020/187344 (24.09.2020 Gazette 2020/39)**

(54) **FAHRZEUG MIT TURBINENSYSTEM**

VEHICLE HAVING A TURBINE SYSTEM

VÉHICULE COMPORTANT UN SYSTÈME DE TURBINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2019 DE 102019001876**

(43) Veröffentlichungstag der Anmeldung:
**19.01.2022 Patentblatt 2022/03**

(73) Patentinhaber: **Menyhart, Tivadar**
**92533 Wernberg-Köblitz (DE)**

(72) Erfinder: **Menyhart, Tivadar**
**92533 Wernberg-Köblitz (DE)**

(56) Entgegenhaltungen:
HR-A2- P20 020 114    US-A- 3 898 794
US-A- 4 354 565       US-A1- 2014 069 090

**Beschreibung**

TECHNISCHES GEBIET

Die Erfindung beschreibt ein Verfahren zum Betrieb von Verbrennungskraftmaschinen, die sich insbesondere als Antriebseinheit für Fahrzeuge eignen, einen sehr niedrigen Brennstoffverbrauch haben und zukünftige Abgasgrenzwerte erfüllen können.

HINTERGRUND

Die Gesetzgebung gibt immer höhere Umweltauflagen bezüglich der Abgaswerte und des $CO_2$-Ausstoßes von Fahrzeugen vor. Herkömmliche Verbrennungskraftmaschinen werden die Anforderungen in naher Zukunft nicht mehr erfüllen können.

Alternativantriebe stehen tief in der Kritik der Öffentlichkeit. Die Brennstoffzelle ist durch den benötigten Platin-Katalysator sehr kostenintensiv. Der erreichbare Wirkungsgrad wird auf maximal 60% beziffert. Der benötigte Wasserstoff kann nur unter hohem Energieaufwand künstlich hergestellt werden und wird in teuren Hochdruckbehältern gespeichert. Typischerweise in CFK-Behältern mit einigen Zentimetern Wandstärke, die heute nur im aufwändigen Wickelverfahren hergestellt werden können. Diese beanspruchen viel Bauraum, bedingt durch die extrem geringe volumetrische Energiedichte des Wasserstoffs. In einem 160l großen Tank kann lediglich etwa 5,5kg Wasserstoff unter 700bar Druck gespeichert werden. Das entspricht der Energiemenge von 15,3kg, oder 20,4 l Benzin.

Die Elektromobilität wird seit einigen Jahren als Zukunftstechnologie favorisiert, konnte sich dennoch trotz staatlicher Förderung nicht durchsetzen. Lange Ladezeiten, fehlende Infrastruktur, kurze Reichweiten, insbesondere bei kalten Außentemperaturen, sind nur im Alltagsbetrieb störend. Wärmeverluste durch Schnellladung, die den Gesamtwirkungsgrad Well-to-Wheel dezimieren, oder die Selbstentladung im Stand werden oft nicht erwähnt. Sehr Bedenklich ist die Umweltbelastung durch die Verwendung von Schwermetallen, seltenen Erden und Säuren in großen Mengen. Ernste Probleme der Akkumulatortechnik bereiten der Abbau der Rohstoffe in oft weniger entwickelten Ländern unter prekären Umständen, der erhöhte Energieaufwand bei der Herstellung, die Entsorgung nach totalem Verschleiß, der schon nach 4-5 Jahren erreicht sein kann, um nur einige zu nennen. Insgesamt wiegt ein komplettes Akkupaket für ein PKW einige hundert Kilogramm. Ein elektrisch angetriebener, voll beladener Sattelzug würde mindestens acht Tonnen Akkus benötigen, die in einem Schnellladezyklus mindestens ein Megawatt elektrischer Ladeleistung bräuchten. Für solche Ladeleistungen auf breiter Ebene müsste das Stromnetz erst ausgebaut und auch mit Energie versorgt werden. Der große technische Durchbruch in der Akkumulatortechnik wird seit Jahren hoffnungsvoll erwartet.

Verbrennungskraftmaschinen haben bekanntlich schlechte Wirkungsgrade ($\eta$=Brennstoffheizwert / abgegebene Energie an der Welle). In der Regel liegt dieser bei stationär betriebenen (Groß-) Dieselmotoren um höchstens 40-50%. Kleinere Dieselmotoren arbeiten mit einem Wirkungsgrad von maximal 40%, bei einem Verdichtungsverhältnis von höchstens 23:1. Ein Ottomotor erreicht im optimalen Betriebspunkt ca. 35% Wirkungsgrad, bei einem Verdichtungsverhältnis von höchstens 15:1. Die besten (Groß-) Gasturbinen liegen bei 42% Wirkungsgrad, mit einem Druckverhältnis von höchstens 33:1. Kleine Mikrogasturbinen erreichen gar nur 25-30%.

Quelle: Richard van Basshuysen, Fred Schäfer: Handbuch Verbrennungsmotor. Grundlagen, Komponenten, Systeme, Perspektiven. 3. vollständig überarbeitete und erweiterte Auflage. Friedrich Vieweg & Sohn Verlag/GWV Fachverlage GmbH, Wiesbaden 2005, ISBN 3-528-23933-6

PROBLEMSTELLUNG

Der thermische Wirkungsgrad von Verbrennungskraftmaschinen wird maßgeblich durch das Verdichtungs-, bzw. Expansionsverhältnis bestimmt. Je größer das Expansionsverhältnis ist, umso höher ist auch der thermische Wirkungsgrad. Das trifft z. B. auf den Diesel-Prozess, den Otto-Prozess, den Seiliger-Prozess, den Brayton-Prozess und den Joule-Prozess zu. Daher wird in allen genannten thermodynamischen Kreisprozessen ein höheres Verdichtungs-, oder Druckverhältnis angestrebt.

Verdichtungs-, Expansions-, bzw. Druckverhältnis sind technisch aneinander gekoppelt und können nicht ohne Weiteres voneinander getrennt werden. Eine höhere Verdichtung verursacht eine höhere Verdichteraustrittstemperatur, was wiederum zu einer höheren Verbrennungstemperatur führt. Diese wird jedoch durch die thermische Festigkeit der Maschine bestimmt und kann nicht beliebig hoch gewählt werden. In Hubkolbenmotoren wird das Expansionsverhältnis zudem durch die Klopfgrenze des eingesetzten Kraftstoffs begrenzt.

Nach momentanem Stand der Technik verdichtet ein nicht aufgeladener Ottomotor bis etwa 15:1. Bei einem nicht aufgeladenen Dieselmotor beträgt dieser Wert höchstens 23:1. Aufgeladene Kolbenmotoren arbeiten nur mit einem deutlich reduzierten Verdichtungsverhältnis $\varepsilon$.

$$\text{Formel: } \varepsilon = 1 + Vh/Vk \text{ (wobei: Vh...Hubvolumen, Vk...Kompressionsvolumen)}$$

Nach momentanem Stand der Technik beträgt das Verdichtungsdruckverhältnis $\pi$ in einer (Groß-) Gasturbine bis zu 33:1. Bei Flugzeuggasturbinen wird der Staudruck bei Reisegeschwindigkeit in das Verdichtungsdruckverhältnis mit einbezogen, daher werden dort größere Werte angegeben.

$$\text{Formel } \pi = p \text{ end } / p \text{ saug}$$

Der Zusammenhang zwischen Druckverhältnis und Verdichtungsverhältnis kann mit folgender Formel beschrieben werden: $\pi = \varepsilon^\wedge \kappa$ (wobei: $\kappa$...Isentropenexponent)

AUFGABE

Der Erfindung liegt die Aufgabe zugrunde, eine Verbrennungskraftmaschine mit einem thermodynamischen Prozess aufzuzeigen, die einen erheblich gesteigerten thermischen Wirkungsgrad aufweist und dadurch den spezifischen Brennstoffverbrauch senkt und die Schadstoffemissionen reduziert. Es soll möglichst viel Brennwert des Brennstoffes in mechanische Energie umgewandelt werden. Darüber hinaus soll die Erfindung mindestens einen konkreten Lösungsansatz in einer genau beschriebenen Maschine aufzeigen, die kostengünstig und umweltschonend hergestellt werden kann, sich durch eine kompakte und leichte Bauweise auszeichnet, sowie aus bereits heute bestehenden technischen Komponenten hergestellt werden kann und sich auch für eine mobile Anwendung eignet.

Zur Lösung dieser Aufgabe wird in Patentanspruch 1 das Verfahren aufgezeigt, welches in der Vorrichtung nach Patentanspruch 2 zur Anwendung kommt. Patentanspruch 3 zeigt ein Fahrzeug entsprechend des Verfahrens und der Vorrichtung aus den Patentansprüchen 1 und 2 auf. Eine weitere Ausgestaltung des Fahrzeugs ist im Patentanspruch 4 beschrieben.

STAND DER TECHNIK

In US 2014/069090 A1 wird ein komplexes, verzweigtes System aus Wärmetauschern, einem aktiven kryogenen Kühlsystem für das Arbeitsmedium und eine Gasturbine beschrieben. Das System saugt in jeder Ausführungsvariante gasförmige Verbrennungsluft aus der Umwelt an. Variante 2 (dargestellt in Bild 2 und in Abs. 0042) ist ein nichtkryogenes Gasturbinensystem mit klassischem Luftverdichter mit einem Verdichtungsverhältnis von 5:1. Die verdichtete Luft wird durch die Abgase der Turbine vorerwärmt, mit Abgas angereichert und in einer Turbine entspannt. Hierbei handelt es sich um eine luftatmende Microgasturbine.

Die Varianten 1 und 3 (Bild 1 und 3, Abs. 0037-0041 und Abs. 0046-0048) beschreiben, wie die angesaugte Verbrennungsluft einer Gasturbine erst durch mehrere Wärmetauscher heruntergekühlt wird, dann in einem Teilstrom dem Kompressor zugeführt wird und in einem Teilstrom durch ein kryogenes Kühlsystem geleitet und dabei verflüssigt wird. Das verflüssigte Arbeitsfluid kann in einem Dewarbehälter für den Motorstart zwischengespeichert werden und ist auch von außen befüllbar. Geregelt werden die Teilströme über ein Bypassventil. Primäres Ziel hierbei ist, dass die Fluiddichte vor dem Kompressor, bzw. Pumpe erhöht wird, die Kompressibilität abnimmt, und die erforderliche Kompressionsarbeit dadurch minimal bleibt. Da die Umgebungsluft nicht frei von Feuchtigkeit ist, dürften die Wärmetauscher 118, 318 des Systems, insbesondere bei feuchter Wetterlage zur Vereisung neigen, was die Funktion bis zum Totalausfall beeinträchtigen kann. Das Thema Luftfeuchtigkeit wird nicht näher behandelt. In jedem Fall verschlechtert schon eine dünne Eisschicht den Wärmeübergang an dieser Stelle signifikant. Die Wärmetauscher müssten auf der kalten Seite des Systems eine Temperaturdifferenz von etwa 220°C zuzüglich der Verdampfungsenthalpie der kaltverflüssigten Luft überwinden (Außentemperatur 30°C → -190°C). Somit sind verhältnismäßig große, voluminöse Wärmetauscher mit einer zusätzlichen Wärmeisolierung gegenüber Umweltwärme für einen guten Wirkungsgrad unabdingbar. Diese nehmen in einem Fahrzeug wertvollen Bauraum weg, erhöhen das Gesamtgewicht und treiben die Kosten in die Höhe. Je schneller der Volumenstrom in einem Wärmetauscher ist, umso größer muss das Volumen sein, um einen hohen Wirkungsgrad zu erreichen.

Die Tatsache, dass die Teilströme nach der Verdichtung, bzw. Druckerhöhung in einer Pumpe, jeweils durch Wärmetauscher geleitet werden und dabei erst Umgebungswärme aus dem Frischgas, dann Wärme aus dem Abgas der Turbine aufnehmen, schließt die Annahme aus, dass das Arbeitsfluid / die Verbrennungsluft in kaltflüssigem Aggregatzustand in die Brennkammer gelangt. Dies wäre allerdings eine sehr wichtige Voraussetzung, um ein Druckverhältnis von über 200 zu erreichen. Die Turbineneintrittstemperatur beträgt 825°C, das Kompressionsdruckverhältnis 1:20 (Abs. 0047). Wird das Fluid in einer isentropen Turbine entspannt, beträgt die Abgastemperatur folglich mindestens 400°C, die im Rekuperator 106, bzw. 306 unmittelbar an den Frischluftstrom weiter gegeben wird, um diesen zu erhitzen. Der kaltverflüssigte Teilstrom der Frischluft wird bereits im Rekuperator 106, 306 bzw. im Wärmetauscher 118, 318 verdampft. In einem Teilstrom wird in Variante 3 sogar ungekühltes Abgas über ein Ventil und eine Saugstrahlpumpe in den Frischluftstrom zurückgeführt. Ein außergewöhnlich großes Druckverhältnis / großer Brennkammerdruck, findet hier keine Erwähnung. Es wird sogar mehrfach darauf hingewiesen, dass ein niedriges Turbinendruckverhältnis angestrebt wird (Abs. 0044 und 0047).

Insgesamt durchläuft das hier beschriebene System einen Kreisprozess, der auf einem wesentlich niedrigeren Druck- und Temperaturniveau operiert. Im TS-Diagramm wird dadurch eine erheblich kleinere Fläche eingeschlossen, was auf einen schlechteren Wirkungsgrad hinweist. Ein wesentlicher Teil der Fläche verrichtet keine Arbeit, da dort lediglich Wärme rekuperiert wird. Eine nähere Bewertung des Kreisprozesses lässt auf einen ideal reversiblen Wirkungsgrad von maximal 60% schließen. Wenn der einlassseitige Luftstrom nicht zu 100% verflüssigt wird, sondern über Bypassventil 122, bzw. 322 angedrosselt wird und die "Abkürzung" zum Kompressor nimmt, steigt die benötigte Antriebsenergie für den Kompressor 120, bzw. 318 und der Wirkungsgrad des Systems fällt weit unter 60%.

Da für den Antrieb und die Aufrechterhaltung des kryogenen Kühlsystems Bremsenergie. Sonnenenergie, oder Fahrtwind verwendet wird, kann angenommen werden, dass ein Fahrzeug mit diesem System unter ungünstigen Voraussetzungen nur relativ schlechte Wirkungsgrade von weit unter 60% erreichen würde, z. B. auf einer Autobahnfahrt nachts, ohne Sonnenenergie, mit gleichmäßiger Geschwindigkeit, bei welcher fast keine Bremsenergie abfällt.

In Variante 4 (Bild 4) wird ein Wechselsystem beschrieben, das den Austausch des gesamten Dewarbehälters erlaubt, welches das kaltverfestigte Kühlmedium Stickstoffeis beherbergt. Verbrauchtes Stickstoffeis kann durch Austausch des kompletten Dewarbehälters wieder aufgefüllt werden, was unter oben Beschriebenen ungünstigen Verhältnissen (lange Autobahnfahrt, Dunkelheit) nicht selten der Fall sein wird. Wechselstationen für wiederauffüllbare Dewarbehälter als Tauschgut müssten im Prinzip an jeder Tankstelle bereit stehen. Ein Wechselsystem stieß bereits bei Fahrzeugakkus auf wenig Akzeptanz. Finanzierung der Ersatzbehälter, Lagerhaltung, teure automatisierte Roboteranlagen, die einen schnellen und sauberen Wechsel ermöglichen und nicht zuletzt die schwierigere Fahrzeugintegration unter Berücksichtigung von z. B. Crashsicherheit sprechen gegen ein Wechselsystem.

Wenn ein Fahrzeug mit diesem System über mehrere Tage in einer Garage geparkt wird, schmilzt und verdampft das Kühlmedium durch latente Umgebungswärme auch in einem Dewarbehälter. Dann muss das Überschüssige Stickstoffgas kontrolliert in die Umwelt entlassen werden (Stichwort: Blow-off). Das ist insbesondere in geschlossenen Räumen, wie Tiefgaragen problematisch, da eine erhöhte Stickstoffkonzentration in Atemluft toxisch wirkt. Auch damit setzt sich die Schrift nicht auseinander.

Systeme zur Zwischenspeicherung von Energie mittels kaltverflüssigter Luft sind bereits bekannt. DE102013203044A1 z. B. beschreibt eine luftatmende, stationäre Gasturbineneinheit, die in allen beschriebenen Varianten einen Luftkompressor und eine Gasturbine umfasst. Die Leistung der Turbine wird durch Zugabe von Flüssigluft zum Komressionsprozess geregelt oder erhöht. Die Flüssigluft wird hier nicht unmittelbar in die Brennkammer gespritzt, sondern entweder vor die Einsaugvorrichtung, oder direkt in den Luftkompressor. In beiden Fällen vermengt sich die Flüssigluft also mit angesaugter Luft, was eine 100%ige Flüssigluftzugabe prinzipiell ausschließt. Ohnehin wäre es energetisch gesehen nicht sinnvoll die zu 100% eingespritzte Flüssigluft erst vor, oder im Kompressor, in diesem Fall beim Hochlaufen der Turbine im Vakuum verdampfen zu lassen, um sie dann unter großem Energieaufwand wieder zu komprimieren. Diese Maßnahme bewirkt im Wesentlichen eine Abkühlung der angesaugten, komprimierten Luft und erhöht dadurch den Massenstrom, bzw. senkt die Kompressoraustrittstemperatur. Hierbei ändert sich der Aggregatszustand der Flüssigluft noch weit vor Erreichen der Brennkammer in "gasförmig". Die höhere Frischluftdichte bewirkt ein etwas erhöhtes Kompressordruckverhältnis, welches alleine durch die Abkühlung der Frischluft erreicht wird. Die erreichbare Steigerung des Wirkungsgrades ist relativ moderat. Ein variables Druckverhältnis der Turbine auf Auslassseite - das für einen signifikant höheren Wirkungsgrad nötig wäre - findet hier keine Erwähnung.

Fahrzeugantriebe mittels kaltverflüssigter Luft werden z. B. in US4 354 565 beschrieben. Die zwischengespeicherte Energie wird aus Flüssigluft, oder aus Flüssigstickstoff erzeugt. Der Oxidator, bzw. das nicht brennbare Arbeitsgas (Stickstoff) wird vor der Einleitung in die erste Arbeitskammer durch eine Kette von Wärmetauschern geleitet. Hierbei wird die flüssige Luft / Stickstoff erwärmt, nimmt Energie auf und tritt dabei unter 200bar Prozessdruck unmittelbar in den überkritischen Zustand über. Der Aggregatszustand ändert sich noch vor Erreichen der Arbeitskammer / Brennkammer, nämlich im Wärmetauscher, von "flüssig" zu "überkritisch" und wird verdampft, bzw. pseudoverdampft. Hier wird zwar Wärmeenergie aus der Umwelt, bzw. Abwärme des Fahrzeugs genutzt, es geht allerdings auch ein Teil der Volumenänderungsarbeit im Wärmetauscher verloren, bzw. der Wärmetauscher selbst bewirkt einen erheblichen Druckabfall.

Ein derartiges Wärmetauschersystem in einem Fahrzeug wäre aufgrund der hohen Prozessdrücke und den Verzweigungen / Verkettungen komplex, schwer und teuer - bedingt durch die großen Wandstärken der Wärmetauscher mit 200bar Systemdruck, zuzüglich den Sicherheitsvorschriften für Hochdruck führende Komponenten. Probleme ergeben sich aus der Vereisung der Wärmetauscher, der Luftkondensation, sowie der Sauerstoffanreicherung an tiefkalten Wärmetauschern. Darüber hinaus wirkt das große Totvolumen äußerst träge und dadurch in einem dynamischen System, das bei Leistungsabfrage durch den Fahrer möglichst direkt ansprechen soll, technisch enorm schwierig darstellbar.

Die thermische Trägheit und der Bedarf an Wärmeenergie aus der Umwelt erfordert einerseits große Wärmetauscher - insbesondere bei kalten Außentemperaturen. Andererseits müssen gasführende Volumina eines dynamischen Systems so kompakt wie möglich gestaltet sein, sowie mit geringem Strömungswiderstand behaftet sein, ähnlich wie Ladeluft- und Abgasführungswege aufgeladener Motoren. Um eine vernünftige Reichweite zu erreichen, wäre der Flüssiglufttank, bzw. Stickstofftank inkl. Inhalt unverhältnismäßig schwer und groß.

US 3736745 A beschreibt ein geschlossenes System, in Anlehnung an den überkritischen CO2 Brayton Prozess mit Rückführung der Verbrennungsprodukte, die das Arbeitsfluid darstellen. Das Arbeitsfluid besteht zum Großteil aus flüssigem / überkritischem CO2 und Wasser. Das Arbeitsfluid kann ggf. auch zwischengespeichert werden und wird der Brennkammer in überkritischem Zustand, also Gasförmig, unter 200 bar Druck, mit hoher Dichte zugeführt. Die Zuführung des Oxidators (reiner Sauerstoff) erfolgt aus einer Flasche, ebenfalls gasförmig. Um die Verflüssigung des Arbeitsfluids vor dem Hochpumpen auf Einspritzdruck zu gewährleisten sind effiziente, druckfeste Wärmetauscher zur Rückkühlung mit einem Betriebsdruck zwischen 100 und 200 bar nötig. Das Arbeitsfluid wird zusammen mit verhältnismäßig wenig Oxidator und Brennstoff in die Brennkammer geblasen. Bei der Verbrennung erwärmt sich das Fluid lediglich um etwa 160K. Danach entspannt es sich in der einstufigen Turbine mit einem sehr kleinen Druckverhältnis von etwa $\pi=2$. In der Schrift wird ein thermischer Gesamtwirkungsgrad von ca. 42% angegeben, den heute auch kleinere Dieselmotoren erreichen. Die spezifische technische Arbeit beträgt lediglich ca. 130kJ/kg. Die Maschine kann kompakter gestaltet werden als eine Dampfturbine was in erster Linie aus der hohen Fluiddichte (ca. 90-100kg/m$^3$) resultiert.

Ein ähnliches System ist aus FR 2776018 A1 bekannt, das als U-Boot Antrieb, oder Schiffsantrieb gedacht war. Auch hierbei handelt es sich um ein teilweise offenes System mit Kondensatrückführung in den Verbrennungsprozess. Hierbei wird kondensierter Wasserdampf aus dem Abgas gewonnen und als flüssiges Wasser (250-300°C heiß) wieder in die Brennkammer gespritzt. Im Tauchmodus wird das System mit kaltverflüssigtem Sauerstoff, oder Drucksauerstoff aus einem mitgeführtem Tank gespeist. Wahlweise kann auch Umgebungsluft an der Wasseroberfläche angesaugt werden. Der Brennkammerdruck beträgt ca. 15-20bar, somit kann das Druckverhältnis der Arbeitsturbine höchstens $\pi=15$ betragen. Klarer Vorteil des Systems ist der mögliche Unterwasserbetrieb ohne Luftschnorchel und die im militärischen Bereich wichtige, niedrige Abwärmesignatur, die durch die Wärmerückgewinnung aus den Verbrennungsprodukten realisiert wird. Der Wirkungsgrad dürfte auch hier kaum über 42% liegen. Die nötigen Wärmetauscher machen auch dieses System komplex, kostenintensiv und schwer.

BESCHREIBUNG

Im Folgenden wird für alle chemische Verbindungen, oder Gemische, die andere Stoffe oxidieren können, also in der Lage sind Sauerstoffatome abzugeben, vorwiegend der Begriff "Oxidator" verwendet. LAIR steht für "liquid air". LOX steht für "liquid oxygen".

Im Folgenden werden die Begriffe "tiefkalt", "kaltverflüssigt", "kaltflüssig", "kryogen" auf Gase angewendet, deren Siedetemperatur weit unter der Umgebungstemperatur liegt. Flüssige Luft etwa hat eine Siedetemperatur von ca. -190°C.

Im Folgenden wird für der Begriff "Turbine" für eine Expansionsmaschine mit Läufer verwendet, die keinen Verdichter hat, mit einem (kalt-)flüssigen Oxidator betrieben wird und ein Druckverhältnis von mindestens $\pi=200$ aufweist.

Im Folgenden wird der aus der Literatur bekannte Begriff. turboelektrischer Antrieb" für die Einheit aus einer Turbine, die einen Generator antreibt, sowie den elektrischen Antriebsmotor eines Fahrzeuges, verwendet.

Der Begriff Gasturine" wird im Folgenden für Turbinen im 'klassischen Sinn' verwendet also Maschinen mit einem Verdichter und mit einem Druckverhältnis bis etwa $\pi=35$.

ERLÄUTERUNG DER ZEICHNUNGEN

FIG. 1 zeigt das hier beschriebene Verfahren als rechtsdrehenden thermodynamischen Kreisprozess im Ts-Diagramm. Als Vergleich ist ein idealer Joule Kreisprozess (gestrichelt) angegeben.

FIG. 2 zeigt das beschriebene Verfahren als rechtsdrehenden thermodynamischen Kreisprozess im pV-Diagramm. Als Vergleich ist ein idealer Joule Kreisprozess (gestrichelt) angegeben.

FIG 3 zeigt das System einer turboelektrischen Maschine mit einer Turbine die nach dem Verfahren aus FIG. 1 und FIG. 2 arbeitet.

FIG. 4 zeigt das Prinzipbild eines Fahrzeuges, das mit dem turboelektrischen Antriebssystem aus FIG. 3 ausgestattet ist.

FIG. 5 zeigt das Prinzipbild einer Fahrgastraum-Klimatisierung mit zerstäubter tiefkaltflüssiger Luft.

FIG. 6 zeigt das Prinzipbild eines Verdampfungsbehälters für tiefkalte Flüssigluft.

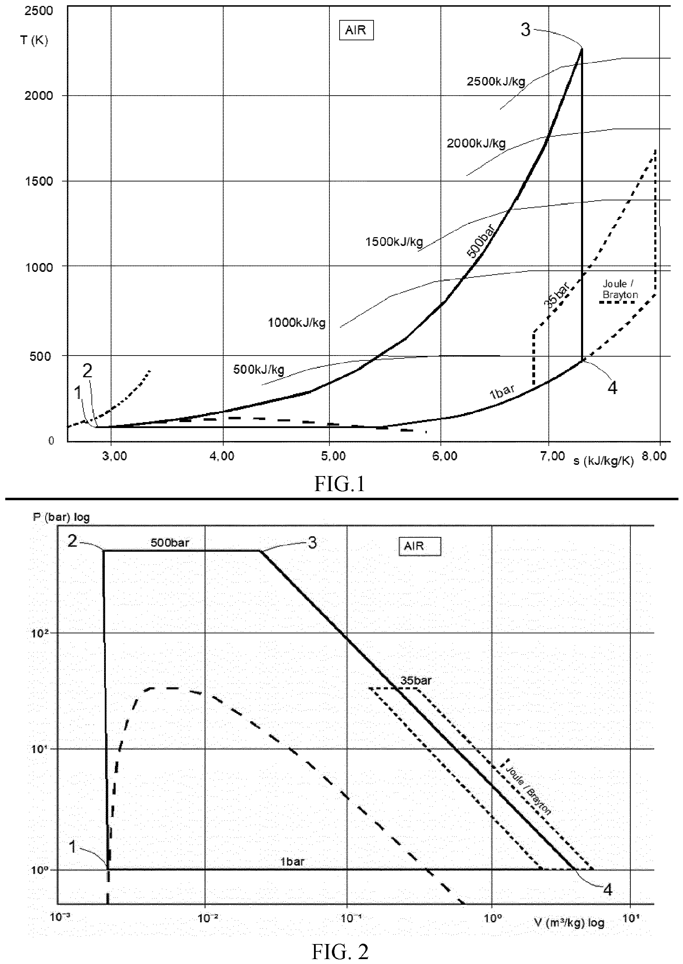

(FIG. 1 und FIG. 2) BEISPIEL im T-s-Diagramm, bzw. im p-V-Diagramm für Luft.
Erläuterung der Zustandsänderungen.

**1 - 2 Isentrope Kompression**

Der Druck des kaltflüssigen Oxidators wird durch eine Flüssigkeitspumpe von $p_1=1$bar auf $p_2=500$bar gebracht
Die Temperatur wird dabei von $T_1=80$K auf $T_2=91$K erhöht
Zufuhr der spezifischen Verdichterarbeit $wt_{12}=60$ kJ/kg
Die spezifische Entropie bleibt konstant
Das spezifische Volumen sinkt von $V_1=1{,}15 \times 10^{-3}$ m$^3$/kg auf $V_2= 1{,}08 \times 10^{-3}$ m$^3$/kg

**2 - 3 Isobare Verbrennung**

Die Verbrennung findet stetig in einer Flammzone statt

Keine Druckänderung

Die Temperatur steigt von $T_2=91$K auf $T_3=2250$K

Zufuhr der Wärmemenge $q_{23}=2750$kJ/kg

Die spezifische Entropie erhöht sich von $s_2=2{,}8$ kJ/kg/K auf $s_3=7{,}3$ kJ/kg/K

Das spezifische Volumen steigt von $V_2 = 1{,}08 \times 10^{-3}$ m$^3$/kg auf $V_3 = 1{,}35 \times 10^{-2}$ m$^3$/kg

**3 - 4 Isentrope Expansion**

Expansion in einer Turbine

Der Druck entspannt sich von $p_3=500$bar auf $p_4 = 1$bar

Die Temperatur sinkt dabei von $T_3=2250$K auf $T_4=466$K

Entzug der Turbinenarbeit $wt_{34}= -2208$kJ/kg

Die spezifische Entropie bleibt konstant

Das spezifische Volumen steigt dabei von $V_3=1{,}35 \times 10^{-2}$ m$^3$/kg auf $V_4= 1{,}38$ m$^3$/kg

**4 - 1 Isobare Wärmeabfuhr**

Das Gas wird in die Umgebung entlassen.

Entzug der spezifischen Wärme $q_{41}= -608$kJ/kg

Die Erfindung schlägt einen rechtslaufenden Kreisprozess vor (FIG 1, FIG 2), bei dem der Oxidator (im diesem Beispiel Luft) in kaltverflüssigtem Zustand zugeführt wird. Somit entfällt der Verdichtungstakt. Statt dessen wird der flüssige Oxidator unterhalb seiner kritischen Temperatur auf den Einspritzdruck gebracht und in die Brennkammer gespritzt. Der Einspritzdruck muss unter Realbedingungen höher liegen, als der Verbrennungsdruck, um diesen zu überwinden.

Verglichen mit den klassischen Kreisprozessen aus der Thermodynamik ist die Abgastemperatur um einige hundert Kelvin (4) niedriger. Aus dem Graphen kann man entnehmen, dass die Nutzarbeit (Fläche innerhalb 1-2-3-4-1) im Verhältnis zur Abgeführten Wärmemenge sehr groß ist. Der ideale Thermische Wirkungsgrad beträgt über 80%. Die spezifische Nutzarbeit ist in etwa 4-mal so groß, wie in einem vergleichbaren Joule/Brayton-Prozess. Formel: $\eta = Wnutz / Qzu$

Als Oxidator eignen sich alle Sauerstoffträger, die in kaltverflüssigtem Zustand, oder im flüssigen Zustand bei Normtemperatur, auch unter erhöhtem Druck, gespeichert werden können. Dazu gehört zum Beispiel Flüssigsauerstoff (LOX), oder sauerstoffangereicherte, kaltverflüssigte Luft. Besonders gut eignet sich kaltverflüssigte Luft (LAIR) mit natürlichem Sauerstoff-, Stickstoff- und Argonanteilen, da sie nicht giftig ist und keine direkte Gefahr für die Umwelt darstellt, wenn sie in niedrig dosierten Mengen entweicht. Zudem kann sie überall aus der Umgebungsluft gewonnen und kostengünstig produziert werden.

Der Oxidator (11) kann in einem vakuumisolierten Behälter (35) gespeichert werden. Diese sind - ähnlich einer Thermoskanne - doppelwandig aufgebaut und gegen Strahlung abgeschirmt, damit die gespeicherte Flüssigkeit möglichst lange kalt bleibt. Eine tägliche Abdampfrate von 1% des Inhalts ist durch Erwärmung unvermeidbar. Kleine Abdampfmengen können ohne Gefahr in die Umwelt entlassen werden. Typischerweise wird kaltverflüssigte Luft bei ca. -190°C (80K) unter höchstens 5 bar Behälterdruck gespeichert. Die Betankung kann drucklos über einen gut kälteisolierten Schlauch geschehen.

Einen wesentlichen Vorteil der Verwendung von Flüssigluft statt Flüssigsauerstoff stellt der größere Massendurchsatz dar, wenn eine Turbine verwendet wird. (Formel: $Q = Wt \times m$). Höherer Massendurchsatz ergibt mehr Nutzenergie. 1kg Benzin benötigt in etwa 14,7kg Flüssigluft für die stöchiometrische Verbrennung. Bei der Verbrennung von Benzin mit reinem Sauerstoff (02) wäre das Verhältnis in etwa 1kg Benzin zu 3,5kg Sauerstoff.

Weiterer Vorteil einer Turbine ist, dass keine Ein- und Ausschiebearbeit, geleistet werden muss. Verdichtungsarbeit muss ebenfalls nicht geleistet werden. Es sind lediglich verhältnismäßig geringe Verluste zu erwarten, die sich aus Druckverlust in der Einspritzvorrichtung, Wirkungsgrad der Oxidatorpumpe(n), Brennkammerwirkungsgrad und Turbinenwirkungsgrad ergeben.

Es bedarf weitaus weniger Energie, den Oxidator in der (kalt-) flüssigen Phase auf ein höheres Druckniveau zu pumpen, als ihn in der Gasphase zu verdichten. Flüssigkeiten sind im Gegensatz zu Gasen beinahe inkompressibel und erwärmen sich kaum bei isentroper Druckerhöhung. Die isentrope Druckerhöhung von kaltverflüssigter Luft von 1 auf 500 bar bewirkt eine Temperaturerhöhung von etwa 11 Kelvin. Die Dichte des Fluids nimmt dabei in etwa um 7% zu. Der Anteil der benötigten Antriebsenergie der Einspritzpumpe(n) ist verschwendend gering. In einer herkömmlichen Gasturbine, die in stöchiometrischem Verhältnis Luft ansaugt und verdichtet geht etwa 33% der mechanischen Wellenenergie als Antriebsenergie des Verdichters verloren. Bekanntlich müssen Gasturbinen noch höhere Luftmengen ansaugen und verdichten, um die innere Kühlung der Brennkammer und der Turbine zu gewährleisten.

Die Einschiebearbeit und die Verdichtungsarbeit, die in einem herkömmlichen Hubkolbenmotor, oder einer Gasturbine in gasförmigem Aggregatszustand anfällt, muss nicht geleistet werden. Die Verrichtung der Verdichtungsarbeit geschieht z. B. in einer stationären Luftverflüssigungsanlage unter einem weitaus höheren Wirkungsgrad. In einem Kraftwerk kann elektrischer Strom vorwiegend nachts in der Billigstromphase genutzt werden, wenn ohnehin eine Überproduktion besteht. Die so entstandene Druckenergie wird im Oxidator (z. B. kaltverflüssigte Luft) gespeichert. Bei der Verbrennung in der Brennkammer wird ein Großteil dieser Druckenergie wieder frei gesetzt. Wird der Oxidator bis zum Eintritt in die Brennkammer im flüssigen Aggregatszustand gehalten, also unter der kritischen Temperatur, bleibt die Strömungsgeschwindigkeit niedrig. Dadurch bleiben Drossel- und Strömungsverluste ebenfalls niedrig. Die benötigte Einschiebearbeit beim Einspritzen in die Brennkammer ist durch das niedrige spezifische Volumen äußerst gering (Formel: $W = p \times V$).

Der Oxidator (11) gibt seine Energie zusammen mit dem Brennstoff nach Zündung in der Brennkammer (15) frei. Die Verbrennungstemperatur kann je nach verwendetem Brennstoff etwa 2000-2400K betragen, wenn kaltverflüssigte Luft als Oxidator zur Verwendung kommt. Wird Sauerstoff (02) verwendet, sind die Verbrennungstemperaturen erheblich höher. Der Brennstoff kann flüssig, oder gasförmig zugeführt werden. Gase benötigen bei der adiabaten Verdichtung allerdings mehr Energie, als Flüssigkeiten, die nahezu inkompressibel sind. Da im Verhältnis zum Oxidator relativ wenig Brennstoff benötigt wird, sind die Verluste allerdings zu verkraften. Der Verbrennungsdruck liegt bei mindestens 200bar, besser 500bar, oder darüber.

Durch die Verbrennung eines kaltverflüssigten Oxidators in einer Hochdruckbrennkammer ergeben sich zwei Effekte, die sich auf die Verbrennungstemperatur auswirken. Zum einen bewirkt der tiefkühle Oxidator eine Senkung, zum anderen bewirkt der hohe Druck eine Anhebung der Vebrennungstemperatur - verglichen mit der rechnerischen adiabaten Verbrennungstemperatur unter Normbedingungen. Das liegt an der höheren Reaktionsfreude der Moleküle unter Druck.

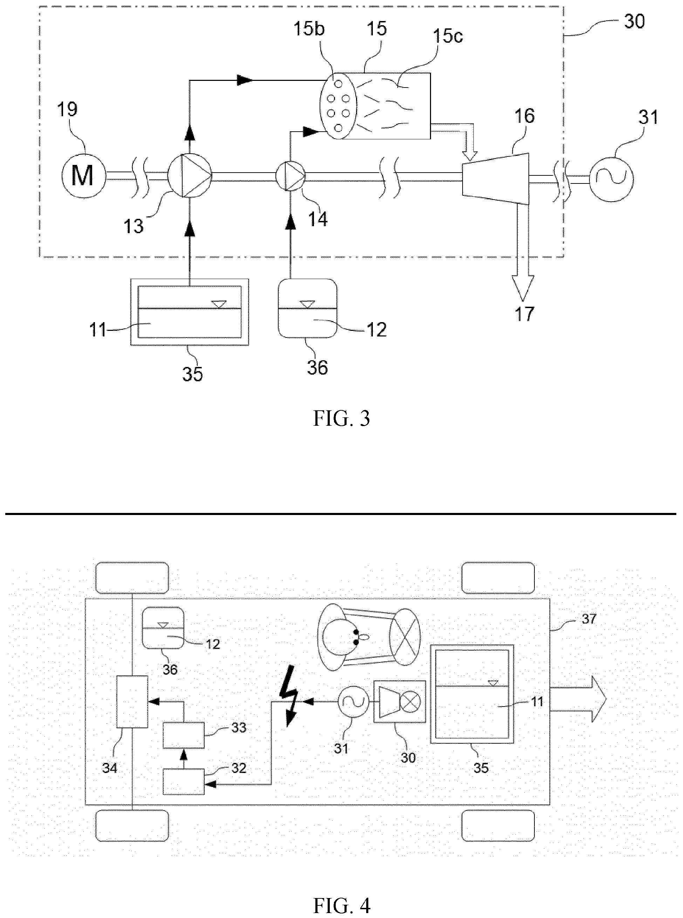

(FIG. 3) Die Brennkammer (15) ist der Brennkammer einer Flüssigkeitsrakete sehr ähnlich aufgebaut. Raketenbrennkammern erreichen Wirkungsgrade von 95%-99,5%. Das liegt an der guten Verteilung, Durchmischung und Turbulenz der Verbrennungsgase. Die Einspritzplatte (15b) besteht aus mehreren miteinander verbundenen gelochten Scheiben. Sie stellt gleichzeitig die Deckplatte der zylindrischen Brennkammer dar und spritzt auf deren Fläche über viele kleine Bohrungen Brennstoff und Oxidator großflächig ein.

(FIG. 3, FIG. 4) Danach erfolgt die Expansion in einer Turbine (16) mit einem Druckverhältnis von mindestens $\pi$=200, besser $\pi$=500 oder höher. Diese verzichtet auf einen Verdichter und müsste ausschließlich auf die Verarbeitung eines tiefkalt verflüssigten Oxidators (11) und eines Brennstoffes (12) optimiert werden. Verdichterlose Turbinen werden heute üblicherweise als Expansionsturbine, oder Turboexpander bezeichnet. Diese weisen in der Regel ein Gesamtdrutkverhältnis von höchstens $\mu$=25 auf. Um ein solches Verhältnis mit bestem Wirkungsgrad zu erreichen, wird die Strömung vor Turbineneintritt in einer Düse auf 1,5 bis 2,5-fache Schallgeschwindigkeit beschleunigt. Siehe WO002014175765A1. Zwei Stufen mit $\pi$=25 in Serie würden bereits ein Gesamtdruckverhältnis von $\pi$ ges =625 in Summe ergeben. Das erforderliche Gesamtdruckverhältnis ist in einer kompakten Maschine mit nur zwei Turbinenstufen und einem guten Wirkungsgrad realisierbar. Formel: $\pi$ ges = $\pi$1 $\times$ $\pi$2

Eine solche Turbine lässt sich einfach an eine E-Maschine (z. B. einen Hochfrequenzgenerator ) koppeln (FIG. 3). Vergleiche 'Turboelektrischer Antrieb' in Lokomotiven und großen Schiffen. Dieser Generator (31) kann im Anlaufbetrieb, oder bei Bedarf, in einen elektromotorischen Betriebszustand umgepolt werden und somit die Turbine bei Bedarf antreiben. Der so erzeugte elektrische Strom kann nach Spannungs- / Frequenzwandlung (32) in einem Akkumulator (33) oder in Kondensator(en) zwischengespeichert werden, bevor der elektrische Strom an die Antriebsmaschine(n) geleitet wird. In so einer Kombination ist auch Rekuperation von Bremsenergie möglich. Der Strom kann auch unmittelbar an den / die elektrischen Antriebsmotor(en) (34) geschickt werden. Die Turbine kann so, für einen möglichst hohen Wirkungsgrad, in einem optimierten Betriebspunkt gehalten werden.

Da Frischgasvolumen und Turbinendrehzahl nicht miteinander zusammenhängen wie bei der Einwellenturbine, ergibt sich eine sehr hohe Dynamik. Die Maschine benötigt weniger Zeit, um einen gewünschten Lastpunkt zu erreichen. Zudem kann der angekoppelte Generator beim Anlaufen oder bei Bedarf (zum Boosten) als Elektromotor gepolt werden.

(FIG. 4) Das Gewicht einer 100kW Turbine dürfte deutlich unter 10kg liegen und ein Bruttovolumen von weniger als 10 Litern aufweisen, inklusive Aggregaten. Überhaupt sind Größe und Gewicht Vergleichbar mit einem Abgasturbolader heutiger PKW, bzw. LKW, auch was die Herstellkosten anbelangt. Somit kann die Turbine in einem PKW leicht dort platziert werden, wo sich heute der Getriebetunnel befindet. In der Fahrzeugfront kann der große vakuumisolierte Behälter (35) für den Oxidator platziert werden.

Eine Turbineneintrittstemperatur von 2400K ist nach heutigem Stand der Technik etwas zu hoch. Die eingesetzten Werkstoffe vertragen dauerhaft keine so hohen Temperaturen. Üblich sind bis zu 1900K in großen Gasturbinen mit Schleier-, oder Filmkühlung. Daher werden vier mögliche Lösungsansätze vorgeschlagen.

Variante 1: Die Turbine wird mit Oxidatorüberschuss, etwa mit $\lambda$=1,2 bis $\lambda$=1,7 betrieben. Vergleichbar mit der Schleier- oder Filmkühlung in einer Gastrubine, wird an Brennkammerwänden und Turbinenstator / Rotor zusätzliche Luft zugeführt. Der Verbrauch gegenüber einer stöchiometrischen Verbrennung wäre dementsprechend erhöht. Der Nachteil der geringeren Turbineneintrittstemperatur gleicht sich in etwa mit dem Vorteil des gesteigerten Massendurchsatzes aus. Die spezifische Nutzarbeit bleibt also annähernd erhalten

Variante 2: Zusätzliche Wassereinspritzung in die Turbine mit dem Ziel der Kühlung (ähnlich Variante 1). Das benötigte Wasser dafür kann aus dem Abgas wiedergewonnen werden. Bei jeder Verbrennung entsteht ohnehin eine nicht unerhebliche Menge Wasser. Beispiel: Benzin-Luft im stöchiometrischen Verhältnis ergibt ca. 8% Wasserdampf im Abgas. Durch die Prinzipbedingt niedrige Abgastemperatur könnte kondensiertes Wasser aus dem Abgastrakt, unter Umständen mit Hilfe von Wärmetauschern zurück gewonnen werden.

Variante 3: Die Turbine wird in zwei Stufen unterteilt mit Hoch- und Niederdruckteil betrieben. Nach der isentropen Entspannung im Hochdruckteil wird das Rauchgas an der Außenwand der Brennkammer vorbei geleitet oder in einen Wärmetauscher geleitet und dort zwischenerwärmt. Der Wärmetauscher kann aus der Brennkammer, oder den Stator(en) gespeist werden. Das führt zu einer niedrigeren Turbineneintrittstemperatur vor der Hochdruckturbine und einer angehobenen Turbineneintrittstemperatur vor der Niederdruckturbine. Durch die Zwischenüberhitzung (vergleiche Clausius-Rankine-Prozess) sinkt der Gesamtwirkungsgrad nur geringfügig. Der Druckverlust im Wärmetauscher und die längeren Gaswege wirken sich negativ aus.

Variante 4: Bereits in Raketentriebwerken werden im Bereich des Düsenhalses hoch temperaturfeste Kompositwerkstoffe mit sehr geringer Wärmedehnung eingesetzt. Für die Gasturbinenschaufeln der nächsten Generation könnte in den kommenden Jahren durch den Einsatz von keramischen Matrixkompositen eine Dauerfestigkeit bis 2000K erreicht werden. Diese könnten an besonders hoch temperaturbelasteten Stellen eingesetzt werden, etwa Brennkammerwände und der ersten Turbinenstufe. Der Kostenfaktor ist gering gravierend, da die betroffenen Teile ungleich kleiner sind. Der Turbinenläufer einer 100kW Turbine wird auf wenige Zentimeter Durchmesser geschätzt. Die hohe Verbrennungstemperatur (3) wird als Chance angesehen, wodurch eine nahezu flammlose Verbrennung verwirklicht werden kann. Stickoxidbildung (NOX) etwa kann dadurch weitestgehend unterdrückt werden. Die Verbrennung verläuft sauberer und vollständiger.

Die Abgase werden durch das große Druckverhältnis auf eine für Verbrennungskraftmaschinen ungewöhnlich niedrige Turbinenaustrittstemperatur (4) von etwa 400-500K abgekühlt (FIG .1). Es entstehen äußerst geringe thermische Verluste. Die Restwärme im Abgas kann trotzdem noch etwa zum teilweisen, oder vollständigen Aufheizen des Fahrgastraumes im Winter verwendet werden. Durch den hohen Wirkungsgrad könnte sich neben herkömmlichem Benzin, oder Dieselkraftstoff, die Verbrennung von Erdgas (hauptsächlich Methan), Wasserstoff, oder eine Mischung aus beiden (Hythan) durchsetzen. In allen Fällen wäre für die gleiche Reichweite ein deutlich kleinerer Druckbehälter nötig. Bisher haben sich Brennstoffzellenfahrzeuge hauptsächlich wegen den hohen Herstellkosten nicht durchgesetzt. An den Herstellkosten hat der Drucktank einen großen Anteil. Der Wasserstoffverbrauch würde verglichen mit der Brennstoffzelle um mindestens 30% sinken. Der Brennstoffverbrauch eines turboelektrischen Antriebes mit einer Turbine, wurde mit einem Turbo-Ottomotor (PKW) und einem Turbo-Dieselmotor (PKW) der neuesten Generation verglichen. Kraftstoffverbrauch, sowie CO2-Ausstoß könnten um 50-65% gesenkt werden. Das entspricht einem realistischen Benzinverbrauch von etwa 1,85-2,1 kg und einem Flüssigluftverbrauch von 28-32 kg in einem Mittelklassefahrzeug mit 1500-1700kg fahrbereitem Gewicht. Folglich sind das etwa 57-66g CO2-Ausstoß pro km im Fahrzeug. Der Energieaufwand für die Herstellung von 1kg Flüssigluft in einem Großkraftwerk beträgt etwa 300 Wh/kg.

## BEZUGSZEICHENLISTE

| | | | | |
|---|---|---|---|---|
| 11 | Oxidator | | 30 | Turbinensystem |
| 12 | Brennstoff | | 31 | Generator |
| 13 | Oxidatorpumpe | | 32 | Spannungs- / Frequenzwandler |
| 14 | Brennstoffpumpe | | 33 | Akkumulator oder Kondensator |
| 15 | Brennkammer | | 34 | elektrischer Antriehsmotor |
| 15b | Einspritzplatte | | 35 | Behälter für Oxidator |
| 15c | Verbrennungsgase | | 36 | Behälter für Brennstoff |
| 16 | Turbine | | 37 | Fahrzeug |
| 17 | Abgas | | 40 | Fahrgastraum |
| 19 | Elektromotor für Pumpe(n) | | 41 | Aussenluftzufuhr |
| | | | 42 | Umluft |
| | | | 43 | Zerstäuber |
| | | | 44 | Verdunstungsbehälter |
| | | | 45 | Zuleitung |
| | | | 46 | Filter |

## WEITERER VORTEIL: KLIMATISIERUNG DURCH FLÜSSIGLUFT

Ein nebensächlicher, aber nicht unwichtiger Vorteil bei der Verwendung von kaltverflüssigter Luft als Oxidator im oben beschriebenen Verfahren in einem Fahrzeug ist die Möglichkeit der Innenraumklimatisierung mit geringem Aufwand.

Aufgabe ist ein System abzubilden, das zur Kühlung des Fahrgastraumes dient. Das soll mit wenig technischem Aufwand, geringem Gewicht und kompakten Abmessungen realisierbar sein. Zudem soll es wenig Antriebsenergie benötigen, ohne Verwendung eines Kältemittels auskommen und auch im Stand betrieben werden können. Zur Lösung dieser Aufgabe wird ein Verfahren entsprechend dem Patentanspruch 2 aufgezeigt.

In einem Fahrzeug besteht im Sommer Kühlungsbedarf, der herkömmlicherweise durch eine Kondensations-Klimaanlage mit schlechtem Wirkungsgrad bewerkstelligt wird. Typisch sind 4-6kW Antriebsleistung für einen Klimakompressor. Benötigt werden durchschnittlich allerdings nur etwa 0,25kW Kühlleistung in einem PKW. Eine solche Kühlung ist durch die Verdampfung von ca. 2,5-3 Liter kaltverflüssigter Luft pro Stunde sicher gestellt.

Mit Wasser betriebene offene, oder geschlossene Verdunstungssysteme sind bekannt, z. B. aus DE10221191A1 und DE19729077A1. Wasser kann allerdings bei Weitem nicht die Kälteenergie von kaltverflüssigter Luft liefern. Darüber hinaus erhöht ein offenes System die Luftfeuchtigkeit im gekühlten Raum und verschlechtert damit das Wohlbefinden der Passagiere.

Geschlossene tiefkalte Systeme, die im geschlossenen Kreislauf betrieben werden, speziell mit Stickstoff befüllt, sind ebenfalls bekannt, z. B. EP611934B1. Ein solches System ist allerdings komplex und benötigt Antriebsenergie für mindestens einen (Kälte-) Kompressor. Alle geschlossenen Systeme, die im umgekehrten Rankine-Kreisprozess betrieben werden, benötigen mechanische Antriebsenergie, die in der Regel von einen Verbrennungsmotor bereit gestellt wird. Der Gesamtwirkungsgrad ist durch die lange Wirkungsgradkette (Verbrennungsmotor - mechanischer Antrieb - Kältemittelkompressor - Verdampfer - Wärmetauscher) relativ schlecht. Somit wird überdurchschnittlich viel Energie für die Kühlung benötigt. Der zusätzliche Schadstoffausstoß / CO2-Ausstoß ist hoch.

In KR102005020448A wird die Verdüsung von kaltverflüssigtem Stickstoff in einem parkenden Fahrzeug im Sommer aufgezeigt. Der Nachteil von reinem Stickstoff in einem nahezu geschlossenen Fahrgastraum ist, dass er bei Anreicherung in der Luft zur Hypoxie und schlimmsten Falls zum Tod durch Erstickung führen kann. Daher kann ein solches System nur dann höhere Mengen des Kühlmittels in den Innenraum abgeben, wenn sich keine Personen oder Tiere im Fahrgastraum befinden. Vor dem Einstieg muss gelüftet werden.

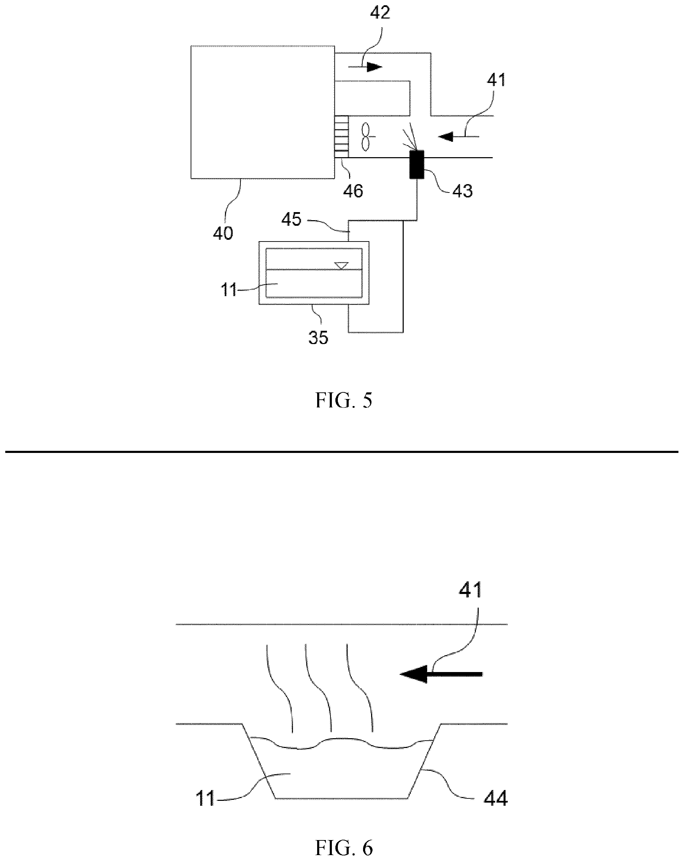

(FIG. 5, FIG. 6) Es wird vorgeschlagen bei sommerlichen Temperaturen die Außenluftzufuhr (41), oder die Umluft (42) für den Innenraum mit zugeführter kaltverflüssigter Luft (11) aus dem vakuumisolierten Behälter (35) anzureichern. Das kann durch eine Zerstäubung (43), oder Verdüsung der Flüssigluft geschehen. Alternativ kann durch die zielgerichtete Verdampfung in einem Verdampfungsbehälter (44), über eine mit Flüssigluft benetzte Fläche, oder eine befeuchtete Membran gekühlt werden. Alternativ, oder zusätzlich zur flüssigen Zufuhr, kann auch die Abdampfmenge, die im vakuumisolierten Behälter ohnehin durch Isolationsverluste entsteht, dosiert in den Fahrgastraum eingeleitet (45) werden. Sinnvoll wäre in beiden Fällen die Filterung der so entstandenen gasförmigen Luft etwa in einem (Kohle-)Filter (46) vor der Einleitung in den Innenraum. Ein solches System benötigt keine Hochdruck-Kompressoren, oder -Pumpen. Unter Umständen reicht der Überdruck des vakuumisolierten Behälters alleine aus, um die benötigte kaltverflüssigte Luft zu fördern und zu zerstäuben. Eine klein bemessene Förderpumpe sichert die Fördermenge auf jeden Fall.

## Patentansprüche

1. Verfahren zum Erzeugen von Energie aus einem flüssigen Oxidator, sowie einem flüssigen oder gasförmigen Brennstoff in einem turboelektrischen System, **dadurch gekennzeichnet dass**:

   1.1) ausschließlich flüssiger Oxidator (11) für den Verbrennungsprozess als Oxidator im Turbinensystem dient, wobei dieser in flüssiger Form unmittelbar in die Brennkammer (15) der Turbine (16) gespritzt wird,
   1.2) an Stelle der Verdichtungsphase die Druckbeaufschlagung des Oxidators in flüssiger Form in einer Pumpe (13) erfolgt,
   1.3) der Oxidator erst in der Brennkammer (15) verdampft, dann zusammen mit dem Brennstoff verbrannt wird, wobei der Oxidator unterhalb seiner kritischen Temperatur auf den Einspritzdruck gebracht wird und in die Brennkammer gespritzt wird,
   1.4) die Verbrennungsgase (15c), mit einem Gesamtdruckverhältnis von 200 oder mehr ($\pi$ >> 200) in einer Turbine (16) entspannt werden,
   1.5) die mechanische Wellenenergie von der Turbine an einen Generator (31) abgegeben wird, welcher auch in den elektromotorischen Betrieb geschaltet werden kann,
   1.6) der elektrische Strom aus dem Generator nach Bedarf gewandelt (32) wird und
   1.7) der elektrische Strom mit oder ohne Zwischenspeicherung (33) an einen (oder mehrere) elektrischen Antriebsmotor(en) (34) weiter geleitet wird.

2. Vorrichtung zur Durchführung eines Verfahrens nach Anspruch 1, bestehend aus:

   2.1) einem vakuumisolierter Behälter (35) zur Speicherung des Oxidators (11),
   2.2) einem geeigneten Behälter (36) zur Speicherung des Brennstoffs (12),
   2.3) einer Oxidatorpumpe (13), die dem vakuumisolierten Behälter nachgeordnet ist, mit Anbindung an die Turbine, oder mit Anbindung an einen eigenen Elektromotor (19),
   2.4) einer Brennstoffpumpe (14), die dem Brennstoffbehälter nachgeordnet ist, mit Anbindung an die Turbine, oder mit Anbindung an einen eigenen Elektromotor (19),
   2.5) einer Brennkammer (15), mit der darin befindlichen Einspritzplatte (15b), mit Anbindung an die Oxidatorpumpe, sowie Anbindung an die Brennstoffpumpe,
   2.6) einer Turbine (16) die der Brennkammer nachgeordnet ist,
   2.7) einem Generator (31), mit Anbindung an die Turbine,
   2.8) einem Spannungs- / Frequenzwandler (32), der dem Generator nachgeordnet ist und
   2.9) einem Akkumulator (33) oder Kondensator(en) für elektrischen Strom.

3. Fahrzeug mit einer Vorrichtung nach Anspruch 2, welches Teil der Antriebseinheit ist, bestehend aus:

   3.1) einer Vorrichtung aus Anspruch 2 zur Erzeugung von Antriebsenergie und
   3.2) den elektrischen Antriebsmotor(en) (34).

4. Fahrzeug (37) nach Anspruch 3 mit einer Vorrichtung zur Kühlung des Fahrgastraumes, **dadurch gekennzeichnet, dass**

4.1) dem vakuumisolierten Behälter (35) mit der kaltverflüssigten Luft (11) eine kleine Menge entnommen wird, um damit den Fahrgastraum (40) zu kühlen und

4.2) die Zumischung zur Frischluft (41) oder zur Umluft (42) über einen Zerstäuber (43), über einen Verdunstungsbehälter (44), einen Vernebler, über eine mit Flüssigkeit benetzte Fläche, oder Membran erfolgen kann.

**Claims**

**1.** Method for generating energy from a liquid oxidizer, as well as a liquid or gaseous fuel in a turboelectric system, **characterized in that**:

1.1) liquid oxidizer (11) is used exclusively for the combustion process as an oxidizer in the turbine system, this oxidizer being injected in liquid form directly into the combustion chamber (15) of the turbine (16),

1.2) instead of the compression phase, the oxidizer is pressurized in liquid form in a pump (13),

1.3) the oxidizer is evaporated only in the combustion chamber (15), then burned together with the fuel, the oxidizer being brought to the injection pressure below its critical temperature and injected into the combustion chamber,

1.4) the combustion gases (15c) are expanded in a turbine (16) with a total pressure ratio of 200 or more ($\pi \gg$ 200),

1.5) the mechanical shaft energy is delivered from the turbine to a generator (31), which can also be switched to electric motor operation,

1.6) the electrical current from the generator is converted as required (32) and

1.7) the electric current is passed on to one or more electric drive motor(s) (34) with or without intermediate storage (33).

**2.** Apparatus for carrying out a method according to claim 1, comprising:

2.1) a vacuum-insulated container (35) for storing the oxidizer (11),

2.2) a suitable container (36) for storing the fuel (12),

2.3) an oxidizer pump (13) located downstream of the vacuum-insulated container, with connection to the turbine, or with connection to its own electric motor (19),

2.4) a fuel pump (14), which is arranged downstream of the fuel container, with connection to the turbine, or with connection to its own electric motor (19),

2.5) a combustion chamber (15), with the injection plate (15b) located therein, with connection to the oxidizer pump as well as connection to the fuel pump,

2.6) a turbine (16) which is arranged downstream of the combustion chamber,

2.7) a generator (31), with connection to the turbine,

2.8) a voltage / frequency converter (32), located downstream of the generator and

2.9) an accumulator (33) or capacitor(s) for electrical current.

**3.** Vehicle with a device according to claim 2, which is part of the drive unit, comprising:

3.1) a device from claim 2 for generating drive energy and

3.2) the electric drive motor (s) (34).

**4.** Vehicle according to claim 3 with a device for cooling the passenger compartment, **characterized in that**:

4.1) a small quantity is taken from the vacuum-insulated container (35) with the cold-liquefied air (11) in order to cool the passenger compartment (40) therewith, and

4.2) the admixture to the fresh air (41) or to the circulating air (42) can be effected via an atomizer (43), via an evaporation container (44), a nebulizer, via a surface wetted with liquid, or via a membrane.

**Revendications**

**1.** Procédé de production d'énergie à partir d'un oxydant liquide, ainsi que d'un combustible liquide ou gazeux dans un système turboélectrique, **caractérisé en ce que**:

1.1) un oxydant liquide (11) est utilisé exclusivement pour le processus de combustion en tant qu'oxydant dans le système de turbine, cet oxydant étant injecté sous forme liquide directement dans la chambre de combustion (15) de la turbine (16),

1.2) au lieu de la phase de compression, l'oxydant est pressurisé sous forme liquide dans une pompe (13),

1.3) l'oxydant est évaporé uniquement dans la chambre de combustion (15), puis brûlé avec le combustible, l'oxydant étant amené à la pression d'injection en dessous de sa température critique et injecté dans la chambre de combustion,

1.4) les gaz de combustion (15c) sont détendus dans une turbine (16) avec un rapport de pression totale de 200 ou plus ($\pi \gg 200$) ,

1.5) l'énergie mécanique de l'arbre est fournie par la turbine à un générateur (31), qui peut également être commuté pour fonctionner en moteur électrique,

1.6) le courant électrique provenant du générateur est converti selon les besoins (32) et

1.7) le courant électrique est transmis à un ou plusieurs moteurs électriques d'entraînement (34) avec ou sans stockage intermédiaire (33).

2. Appareil pour la mise en oeuvre d'un procédé selon la revendication 1, comprenant:

    2.1) un récipient isolé sous vide (35) pour stocker l'oxydant (11),

    2.2) un récipient approprié (36) pour stocker le combustible (12),

    2.3) une pompe à comburant (13) située en aval du conteneur isolé sous vide, avec connexion à la turbine, ou avec connexion à son propre moteur électrique (19),

    2.4) une pompe à combustible (14), disposée en aval du conteneur de combustible, avec raccordement à la turbine, ou avec raccordement à son propre moteur électrique (19),

    2.5) une chambre de combustion (15), dans laquelle se trouve la plaque d'injection (15b), avec raccordement à la pompe à comburant ainsi qu'à la pompe à combustible,

    2.6) une turbine (16) qui est disposée en aval de la chambre de combustion,

    2.7) un générateur (31), avec connexion à la turbine,

    2.8) un convertisseur tension/fréquence (32), situé en aval du générateur et

    2.9) un accumulateur (33) ou un ou plusieurs condensateurs pour le courant électrique.

3. Véhicule avec un dispositif selon la revendication 2, qui fait partie de l'unité d'entraînement, comprenant:

    3.1) un dispositif selon la revendication 2 pour générer de l'énergie d'entraînement et

    3.2) le(s) moteur(s) d'entraînement électrique(s) (34).

4. Véhicule selon la revendication 3 avec un dispositif pour refroidir l'habitacle, **caractérisé en ce que**:

    4.1) une petite quantité est prélevée dans le récipient isolé sous vide (35) avec l'air froid liquéfié (11) pour refroidir l'habitacle (40) avec celui-ci, et

    4.2) le mélange à l'air frais (41) ou à l'air de circulation (42) peut être effectué par l'intermédiaire d'un atomiseur (43), d'un récipient d'évaporation (44), d'un nébuliseur, d'une surface mouillée de liquide ou d'une membrane.

FIG.1

FIG. 2

FIG. 3

FIG. 4

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014069090 A1
- DE 102013203044 A1
- US 4354565 A
- US 3736745 A
- FR 2776018 A1
- WO 002014175765 A1
- DE 10221191 A1
- DE 19729077 A1
- EP 611934 B1
- KR 102005020448 A